# EUROPEAN PATENT APPLICATION

(11) **EP 2 977 397 A1**
(43) Date of publication of application: **27.01.2016**
(21) Application number: 13878974.8
(22) Date of filing: 03.06.2013
(51) Int. Cl.: C08J 3/02, C08L 23/08, C08L 33/04, D21H 19/58

(54) **METHOD FOR PREPARING ENVIRONMENTALLY FRIENDLY PAPER COATING AGENT BY USING WATER DISPERSIBLE RESIN OF ETHYLENE-(METH)ACRYLIC ACID POLYMER, AND USE THEREOF**

(30) Priority: 20.03.2013 KR 20130029932
(71) Applicant: Rhee, Byeong Seok, Yongin-si, Gyeonggi-do 16851 (KR)
(72) Inventor: Rhee, Byeong Seok, Yongin-si, Gyeonggi-do 16851 (KR)
(74) Representative: Cabinet Laurent & Charras
(86) International application number: PCT/KR2013/004882
(87) International publication number: WO 2014/148685

(57) **Abstract**

There is provided a method of manufacturing a paper-forming product formed of an environmentally friendly paper coating agent, which is excellent in water resistance, oil resistance, thermally adhesive property, and alkaline water-dissociative property, the method including mixing alkali metal hydroxide, amines, ammonia water, or the like with each of an ethylene-acrylic acid copolymer or an ethylene-(meth)acrylic acid copolymer or a mixture of these polymers, and using a water-dispersible coating solution prepared by adding FDA-approved matting agent, slip agent, and anti-foaming agent into a water-dispersible resin solution prepared by neutralizing the mixed product in an aqueous medium.

## Description

### [Technical Field]

The present invention relates to a method of manufacturing an environmentally friendly paper-forming product for food packaging, which is excellent in water resistance, oil resistance, thermally adhesive property, alkaline water-dissociative property, and the like, the method including mixing alkali metal hydroxide, amines, ammonia water, or the like with each of an ethylene-acrylic acid copolymer or an ethylene-(meth)acrylic acid copolymer or a mixture of these polymers, and coating paper with a water-dispersible coating solution prepared by mixing a water-dispersible resin solution prepared by neutralizing the mixed product with FDA-approved matting agent, slip agent, anti-foaming agent, and the like.

### [Background Art]

Generally, solids in food refer to water or oil or food including the same, and have been packed with a plastic bag, aluminum foil, a plastic wrapper, or the like. However, as the environmental problems have been worsened recently, it is urgently necessary to develop an environmentally friendly alternative wrapping wrapper.

Accordingly, there has been widely used a method of packing the solids with a wrapper such as paper, and as a resin used therefor, polyethylene having excellent water resistance and oil resistance and also having a thermally adhesive property has been used as being coated.

In particular, a paper container and a paper-forming product such as a paper cup have been produced by melting polyethylene chips with high temperature heat and heat-fusing the molten polyethylene with base paper. During a melting process of the polyethylene chips, a volatile organic solvent suspected as a carcinogen is generated, and this solvent causes air pollution. Further, it is difficult to be recycled and even when it is buried, it is not naturally dissolved, and therefore, most of the conventional products have been incinerated due to high disposal cost. Furthermore, the conventional products are highly likely to release environmental hormones while being used/disposed, and, thus, have been questioned in terms of food hygiene and safety. Therefore, the conventional products have limits in view of destruction of the environment and recycling of resources.

An ethylene-acrylic acid copolymer or an ethylene-(meth)acrylic acid copolymer has been commercially produced in various ways. A method of preparing an aqueous dispersion by neutralizing carboxylic groups of these resins with amines, alkali metal compounds, ammonia water, or the like has long been known. Further, various water-dispersible products are commercially available.

Particularly, a dispersion obtained by dispersing the copolymer in water with alkali metal hydroxide is easy to be produced, but the thus obtained film has a low water resistance, and an aqueous dispersion obtained by using ammonia is slightly difficult to be produced, but the thus obtained film has a high water resistance.

When an aqueous dispersion is prepared by using ammonia alone, an ethylene-acrylic acid copolymer can be more easily produced than an ethylene-(meth)acrylic acid copolymer.

If an amount of ammonia (a degree of neutralization) is set to be greater by 100 mol% or more than a molar amount of acrylic acid or (meth)acrylic acid included in a copolymerized resin, dispersion may occur, but the thus obtained dispersion has a high viscosity or a residue is increased in amount after filtering, and a bad smell of ammonia becomes strong. Therefore, there is a problem in view of improvement in usage environment of an aqueous dispersion.

Depending on a content of acrylic acid or (meth)acrylic acid in an ethylene-acrylic acid copolymer or an ethylene-(meth)acrylic acid copolymer, a method of manufacturing an aqueous dispersion prepared by neutralization with amines, alkali metal compounds, ammonia water, or the like, easiness in water-dispersibility, a thermal adhesion temperature of a film, and the like, may vary.

Further, depending on kinds and a mixing ratio of amines, alkali metal compounds, and ammonia water used to neutralize acrylic acid or (meth)acrylic acid, a method of manufacturing an aqueous dispersion, easiness in water-dispersibility, solids in the dispersion, viscosity, and the like, may vary.

That is, in the case of a high content of acid, water-dispersibility is good but a thermal adhesion temperature is decreased, and, thus, heat resistance is decreased. In the case of a low content of acid, water-dispersibility is bad but a thermal adhesion temperature is increased, and, thus, heat resistance is increased.

Neutralization of acrylic acid or (meth)acrylic acid with amines may increase easiness in water-dispersibility but increase the viscosity of the aqueous dispersion, and neutralization with ammonia water may not increase easiness in water-dispersibility but decrease the viscosity of the prepared aqueous dispersion.

Korean Patent Laid-open Publication No. 10-2011-0132554 describes a use of an ethylene-(meth)acrylic acid copolymer as an anti-corrosive material by mixing the copolymer with ammonia water and alcohols having 3 or more carbon atoms and neutralizing and dispersing the copolymer in an aqueous medium. This Patent Document does not describe a use of an ethylene-acrylic acid copolymer, a water dispersion method using a mixture of alkali metal and ammonia water, and a use of paper for food packaging.

Korean Patent Laid-open Publication No. 10-2012-0112699 describes a water-dispersible anti-corrosive coating in which a copolymer including acrylic acid or (meth)acrylic acid of 8 wt.% or more in an ethylene-acrylic acid copolymer or an ethylene-(meth)acrylic acid copolymer is used as being mixed with alkanolamines, ammonia water, and low alcohol.

This patent uses low-volatility high molecular alkylamines, and is used as an anti-corrosive coating for steel materials. This patent includes alkylamine having a too low volatility to be used as coating agent for food packaging paper, and, thus, alkylamines may remain after coating and give off a bad smell. This Patent Document does not describe a paper product for food packaging as a use of a product nor a use of a mixture of alkali metal compounds and ammonia water.

### [Disclosure]

### [Technical Problem]

In order to solve the conventrional problems, an object of the present invention is to provide an environmentally friendly paper coating agent suitable for food packaging by providing water resistance and oil resistance to a paper board using prime pulp, and manufacturing a recyclable water-dispersible resin, which has the same effect as polyethylene currently used for manufacturing a paper container since it has a thermally adhesive property and exhibits no roll blocking, in a post-process for molding, and using the same.

Another object of the present invention is to provide an environmentally friendly paper-forming product.

### [Technical Solution]

In order to achieve the above object, an exemplary embodiment of the present invention provides a method of manufacturing an aqueous dispersion prepared by mixing amines, alkali metal hydroxide, and ammonia water with each of an ethylene-acrylic acid copolymer or an ethylene-(meth)acrylic acid copolymer or a mixture of these polymers, and neutralizing the mixture in an aqueous medium.

In an exemplary embodiment of the present invention, preferably, each of the ethylene-acrylic acid copolymer or the ethylene-(meth)acrylic acid copolymer or the mixture of these polymers may be prepared by neutralizing and dispersing a resin including acrylic acid and (meth)acrylic acid having a total content of 12 wt.% to 21 wt.% in the aqueous medium, but may not be limited thereto.

In another exemplary embodiment of the present invention, preferably, the aqueous dispersion is a water-dispersible solution prepared by neutralizing and dispersing each of the ethylene-acrylic acid copolymer or the ethylene-(meth)acrylic acid copolymer or the mixture of these polymers in the aqueous medium, and a film formed thereof has a melting temperature (measured by DSC (Differential Scanning Calorimetry)) of 75°C or more, but may not be limited thereto.

Further, the present invention provides an aqueous dispersion manufactured by the manufacturing method of the present invention, and a total mol% of alkali metal hydroxide, amines, and ammonia water used for neutralizing acrylic acid or (meth)acrylic acid in a resin as each of an ethylene-acrylic acid copolymer or an ethylene-(meth)acrylic acid copolymer or a mixture of these polymers is in the range of 60 mol% to 200 mol% with respect to mol% of acrylic acid or (meth)acrylic acid.

Furthermore, the present invention provides an aqueous dispersion manufactured by the manufacturing method of the present invention, and a mol% ratio of a mixture of alkali metal hydroxide or amines and ammonia water used for neutralizing acrylic acid or (meth)acrylic acid in a resin as each of an ethylene-acrylic acid copolymer or an ethylene-(meth)acrylic acid copolymer or a mixture of these polymers, i.e., a mol% ratio of amines : ammonia water, is in the range of 99 : 1 to 1 : 99.

Also, the present invention provides an aqueous dispersion manufactured by the manufacturing method of the present invention, and a mol% ratio of a mixture of alkali metal hydroxide or amines and ammonia water used for neutralizing acrylic acid or (meth)acrylic acid in a resin as each of an ethylene-acrylic acid copolymer or an ethylene-(meth)acrylic acid copolymer or a mixture of these polymers, i.e., a mol% ratio of alkali metal hydroxide : (amines + ammonia water), is in the range of 40 : 60 to 1 : 99.

Further, the present invention provides an aqueous dispersion manufactured by the manufacturing method of the present invention, and including solids in the range of 10 to 40 wt.% and having the viscosity in the range of 100 to 10,000 cps/25°C.

Furthermore, the present invention provides a method of manufacturing a paper coating solution, which is improved in mechanical property, water repellency, water resistance, oil resistance, thermally adhesive property, heat resistance, anti-blocking property, and alkaline water-dissociative property as a paper coating agent, by mixing additives including a matting agent, a slip agent, an anti-foaming agent with an aqueous dispersion manufactured by the manufacturing method of the present invention.

Also, the present invention provides a method of manufacturing a paper coating solution manufactured by adding silica powder of 1 to 10 wt.% with respect to solids an aqueous dispersion manufactured by the manufacturing method of the present invention and using a polyethersiloxane-based slip agent of 0.1 to 5 wt.% with respect to the solids in the aqueous dispersion.

In an exemplary embodiment of the present invention, preferably, the paper coating solution may include solids in the range of 15 to 30 wt.% and have the viscosity in the range of 50 to 5,000 cps/25°C, but may not be limited thereto.

Further, the present invention provides a paper coating solution manufactured by the manufacturing method of the present invention.

Furthermore, the present invention provides a paper-forming product coated with the paper coating solution of the present invention.

In an exemplary embodiment of the present invention, preferably, the paper-forming product may be a paper cup, but may not be limited thereto.

Hereinafter, the present invention will be described.

The present invention provides an environmentally friendly paper coating agent suitable for food packaging by providing water resistance and oil resistance to a paper board using prime pulp, and manufacturing a recyclable water-dispersible resin, which has the same effect as polyethylene currently used for manufacturing a paper container since it has a thermally adhesive property and exhibits no roll blocking, in a post-process for molding, and using the same.

Since a coating solution prepared by manufacturing a water-dispersible resin by neutralizing and dispersing each of an ethylene-acrylic acid copolymer or an ethylene-(meth)acrylic acid copolymer or a mixture of these polymers and adding a matting agent, a slip agent, an anti-foaming agent, and the like, is used instead of a conventional polyethylene coating, it is possible to exhibit physical properties, such as, water resistance, oil resistance, a thermally adhesive property, and heat resistance, and also possible to achieve recycling of pulp, which cannot be achieved from a conventional polyethylene product, through a conventional process by using the present technique. Further, it is possible to manufacture environmentally friendly food packaging paper which does not cause soil pollution and can be biodegraded.

As a result of a study for manufacturing an aqueous dispersion that increases dispersibility in neutralizing acrylic acid or (meth)acrylic acid in each of an ethylene-acrylic acid copolymer or an ethylene-(meth)acrylic acid copolymer or a mixture of these polymers, enables manufacturing of a low-viscosity product, has less bad small, and has excellent water resistance, oil resistance, thermally adhesive property, and the like with heat resistance required for a food packaging container, it is possible to manufacture an aqueous dispersion suitable for paper coating by using each of ethylene-acrylic acid copolymer or an ethylene-(meth)acrylic acid copolymer or a mixture of these polymers with a mixture of high-volatility amines, alkali metal hydroxide, and ammonia water.

A specific means for manufacturing an aqueous dispersion of the present invention is as follows.

1) There is provided a method of manufacturing an aqueous dispersion prepared by mixing amines, alkali metal hydroxide, and ammonia water with each of an ethylene-acrylic acid copolymer or an ethylene-(meth)acrylic acid copolymer or a mixture of these polymers, and neutralizing the mixture in an aqueous medium.

2) There is provided a method of manufacturing a coating solution, which is suitable for a paper coating agent and excellent in water resistance, oil resistance, thermally adhesive property, heat resistance, alkaline water-dissociative property, and the like by mixing additives including FDA-approved matting agent, slip agent, anti-foaming agent, and the like with the aqueous dispersion described in paragraph 1).

3) There is provided a method of manufacturing a dispersion by neutralizing and dispersing a resin including acrylic acid and (meth)acrylic acid having a total content of 12 wt.% to 21 wt.% in each of the ethylene-acrylic acid copolymer or the ethylene-(meth)acrylic acid copolymer or the mixture of these polymers as used in paragraph 1) in the aqueous medium.

4) There is provided a method of manufacturing an aqueous dispersion in which a film formed of a water-dispersible solution prepared by neutralizing and dispersing each of the ethylene-acrylic acid copolymer or the ethylene-(meth)acrylic acid copolymer or the mixture of these polymers described in paragraph 1) has a melting temperature (measured by DSC (Differential Scanning Calorimetry)) of 75°C or more.

5) There is provided an aqueous dispersion in which a total mol% of alkali metal hydroxide, amines, and ammonia water used for neutralizing acrylic acid or (meth)acrylic acid in a resin as each of the ethylene-acrylic acid copolymer or the ethylene-(meth)acrylic acid copolymer or the mixture of these polymers described in paragraph 1) is in the range of 60 mol% to 200 mol% with respect to mol% of acrylic acid or (meth)acrylic acid.

6) There is provided an aqueous dispersion in which a mol% ratio of a mixture of alkali metal hydroxide or amines and ammonia water used for neutralizing acrylic acid or (meth)acrylic acid in a resin as each of the ethylene-acrylic acid copolymer or the ethylene-(meth)acrylic acid copolymer or the mixture of these polymers described in paragraph 1), i.e., a mol% ratio of (alkali metal hydroxide + amines) : ammonia water, is in the range of 99 : 1 to 1 : 99.

7) There is provided an aqueous dispersion in which a mol% ratio of a mixture of alkali metal hydroxide or amines and ammonia water used for neutralizing acrylic acid or (meth)acrylic acid in a resin as each of the ethylene-acrylic acid copolymer or the ethylene-(meth)acrylic acid copolymer or the mixture of these polymers, i.e., a mol% ratio of alkali metal hydroxide : (amines + ammonia water), is in the range of 40 : 60 to 1 : 99.

8) There is provided an aqueous dispersion manufactured as described in paragraph 1) including solids in the range of 10 to 40 wt.% and having the viscosity in the range of 100 to 10,000 cps/25°C.

9) There is provided a method of manufacturing a paper coating solution including solids in the range of 15 to 30 wt.% and having the viscosity in the range of 50 to 5,000 cps/25°C from an aqueous dispersion manufactured by using silica powder as the matting agent described in paragraph 2) in an amount of 1 to 10 wt.% with respect to solids of the resin and a polyethersiloxane-based slip agent in an amount of 0.1 to 5 wt.%.

10) The coating solution manufactured as described in paragraph 8) is suitable for a paper-forming product for food packaging, i.e., a paper cup.

The aqueous dispersion of the present invention will be described in detail.

The aqueous dispersion of the present invention is manufactured by neutralizing and dispersing each of an ethylene-acrylic acid copolymer or an ethylene-(meth)acrylic acid copolymer in an aqueous medium, or neutralizing and dispersing a mixture of these polymers in an aqueous medium.

If a content of acrylic acid or (meth)acrylic acid in the polymer is decreased, it is difficult to manufacture a stable aqueous dispersion, and even if an aqueous dispersion is manufactured, a viscosity tends to be increased.

In order to easily manufacture a stable aqueous dispersion with a practical viscosity, a content of acrylic acid or (meth)acrylic acid may be in the range of 12 to 21 mass%, more preferably 15 to 18 mass%, with respect to a total mass of the copolymer. Generally, if the content is lower than 12%, it is difficult to be dispersed in water, and if the content is higher than 21%, it has a low heat resistance and thus cannot be used.

If the sum of copolymerization ratios of acrylic acid or (meth)acrylic acid is 15 mass% or more, it becomes easy to obtain a stable aqueous dispersion with less flocculation, higher dispersibility, and higher uniformity of dispersed particles.

A melt flow rate (abbreviated to MFR) of the copolymer used in the present invention is preferably in the range of 10 to 1000 g/10 minutes. Further, the MFR may be more preferably in the range of 20 to 600 g/10 minutes. The MFR is a value measured under a load of 2.16 Kg at 190°C according to ASTM D 1238.

The ethylene-acrylic acid copolymer or the ethylene-(meth)acrylic acid copolymer used in the present invention can be obtained by radical copolymerization at high temperature and high pressure. Various products including acrylic acid or (meth)acrylic acid have been being manufactured and sold. Brand names of copolymer products useful in the present invention are Nucrel (dupont), Primacor (dow), Escor (Exxonmobil), and the like.

If each of the ethylene-acrylic acid copolymer or the ethylene-(meth)acrylic acid copolymer or the mixture of these polymers is neutralized and dispersed in an aqueous medium by using a mixture of ammonia water and alkali metal hydroxide or ammonia water and amines, a total degree of neutralization of each of acrylic acid or (meth)acrylic acid or a mixture thereof with respect to a total content of acid may be preferably in the range of 60 to 200 mol% or less and more preferably in the range of 80 to 150 mol% considering viscosity, smell, dispersion stability, and the like.

If a total degree of neutralization (mol%) with respect to acid is 60% or less, it has a low viscosity and gives off less smell, but it is difficult to be dispersed. Even if it is dispersed, a great amount of residue remains after emulsification during filtering, and stability of a product deteriorates.

If the total degree of neutralization (mol%) with respect to acid is 200% or more, it has an excellent dispersion stability but gives off more smell.

In particular, if a total wt.% of acrylic acid or (meth)acrylic acid used in the ethylene-acrylic acid copolymer or the ethylene-(meth)acrylic acid copolymer is 16% or more, a mol% ratio used for neutralization is in the range of 60 to 120 mol% which is suitable for manufacturing an aqueous dispersion, and if the wt.% of acrylic acid or (meth)acrylic acid is 16% or less, a mol% ratio used for neutralization is in the range of 90 mol% to 200 mol% which is suitable for manufacturing an aqueous dispersion.

As a neutralizing agent for neutralizing and dispersing each of the ethylene-acrylic acid copolymer or the ethylene-(meth)acrylic acid copolymer or the mixture of these polymers of the present invention in the aqueous medium, alkali metal hydroxide, amines, ammonia water, and the like have been long known.

As the alkali metal hydroxide, sodium hydroxide, potassium hydroxide, lithium hydroxide, and the like are suitable, and particularly, potassium hydroxide is most preferable.

As the amines, various amines such as morpholine, methylmorpholine, ethylmorpholine, triethylamine, dimethylethanolamine, diethylethanolamine, monoethanolamine, diethanolamine, methyldiethanolamine, and butylethanolamine, triethanolamine including tertiary amine can be used for manufacturing a stable dispersion. However, considering various factors such as mechanical property, dryness, and smell for a paper coating solution, morpholine, methylmorpholine, ethylmorpholine, and dimethanolamine having a boiling point of 150°C or less are most suitable.

If a mixture of alkali metal hydroxide and ammonia water is used, a mol% ratio of alkali metal hydroxide : ammonia water is suitably in the range of 1 : 99 to 40 : 60 and preferably in the range of 5 : 95 to 30 : 70.

If a ratio of alkali metal hydroxide is increased, dispersion caused by neutralization easily occurs when an aqueous dispersion is manufactured, but a dried film has a low water resistance. If a ratio of alkali metal hydroxide is too low, a dried film has a favorable water resistance, but it becomes somewhat difficult to obtain a stable dispersion.

If a mixture of amines and ammonia water is used, a mol% ratio of amines : ammonia water is suitably in the range of 1 : 99 to 99 : 1.

As a neutralizing agent for neutralizing acid of a resin including acrylic acid or (meth)acrylic acid in a total content of 12 to 21 wt.% in each of an ethylene-acrylic acid copolymer or an ethylene-(meth)acrylic acid copolymer or a mixture of these polymers, a mixture of alkali metal hydroxide or amines which has high volatility and gives off less smell and ammonia water is used, and, thus, it is possible to manufacture an aqueous dispersion which has stability in dispersion in an aqueous medium and has a low viscosity with a small amount of residue remaining after manufacturing and filtering of a product.

In a method of dispersing each of an ethylene-acrylic acid copolymer or an ethylene-(meth)acrylic acid copolymer or a mixture of these polymers in an aqueous medium, a dispersion is prepared by putting ion-exchange water and a neutralizing agent (ammonia water, alkali metal hydroxide, amines, and the like) into an autoclave and stirring them at a high speed at a temperature of 90 to 150°C for 30 minutes to 3 hours. The thus prepared dispersion is cooled to 50°C or less and filtered with a filter, so that a final product is obtained.

The aqueous dispersion prepared by the above-described method may include solids in the range of 10 to 40% and preferably in the range of 15 to 30%, and may have a viscosity in the range of 50 to 10,000 cps/25°C and preferably in the range of 50 to 3,000 cps/25°C.

If the prepared aqueous dispersion has a solid content of less than 10 wt.%, when it is coated on paper, it is difficult to form a coating film having an appropriate thickness. If the aqueous dispersion has a high solid content, a viscosity is increased and smoothness deteriorates, and, thus, it is difficult to form a uniform coating film.

The above-described viscosity range is suitable for securing a mechanical coating process characteristic when paper is coated later.

A film formed by using the prepared aqueous dispersion prepared as described above may have excellent water resistance, oil resistance, heat resistance, thermally adhesive property, alkaline water-dissociative property, and the like.

By mixing additives such as a matting agent, a slip agent, an anti-foaming agent, a water-repelling agent into the environmentally friendly recyclable aqueous dispersion prepared according to the present invention, a paper coating solution suitable for manufacturing a food packaging container is manufactured.

The additives should be FDA-approved products suitable for food.

As the matting agent, collide silica, humed silica, and wax may be used, and as the slip agent, polyethersiloxane, carnauba wax emulsion, paraffin wax emulsion, polyethylene wax emulsion, oxidized wax emulsion, fluorine emulsion, silicon emulsion, and the like may be used.

Silica powder as the matting agent added into the aqueous dispersion is used to improve a surface slip property and printability and reduce gloss, and may be added while the aqueous dispersion is manufactured, or may be added later when a paper coating solution is manufactured.

An amount of the matting agent is suitably in the range of 1 to 10 wt.% and more preferably in the range of 5 to 7 wt.% with respect to the solids in the aqueous dispersion.

In the case of the matting agent of less than 1%, it cannot contribute printability when a coating film is formed, and in the case of the matting agent of more than 10%, it may cause an increase in viscosity or a gelation phenomenon, and, thus, a coating film is not formed but broken.

As a slip agent of the present invention, an aqueous PE wax-based compound, a polyolefin wax copolymer, a siloxane copolymer, a silicon-based compound, and the like can be used.

An amount of the slip agent is suitably in the range of 0.1 to 5 wt.% and more preferably in the range of 0.5 to 3 wt.% with respect to the solids in the aqueous dispersion.

In the case of the slip agent of less than 0.5%, an appropriate slip effect cannot be expected, and in the case of the slip agent of more than 3%, it may cause an increase in defect rate during a cup-forming process or may make it impossible to perform the cup-forming process due to slipperiness.

An aqueous dispersion for paper coating is manufactured by adding an appropriate amount of the matting agent, the slip agent, and the other additives into the aqueous dispersion of the present invention.

As described above, by manufacturing paper coating solution added with various appropriate elements, mechanical properties, i.e., a coating property, an anti-foaming property, dryness, and the like, suitable for coating on food packaging paper can be secured, and by improving surface properties, i.e., a smooth releasing property and a surface strength, of coated paper, problems occurring during a post-process such as an interlayer bonding/adhesion phenomenon of base paper can be removed.

If out of the above-described range, blocking occurs between coated food packaging papers, and, thus, a defect rate may increase during a manufacturing process or a use or it is impossible to manufacture a paper-forming product. Further, there may be problems with film properties, i.e., water resistance, oil resistance, and water repellency, of a finally formed product.

An amount of solids in the coating solution for a paper-forming product for food packaging manufactured as described above may be suitably in the range of 15 to 30 wt.%, and the viscosity thereof may be preferably in the range of 50 to 3,000 cps cps/25°C. More preferably, an amount of solids in the coating solution may be in the range of 20 to 25 wt.%, and the viscosity thereof may be in the range of 100 to 1,000 cps/25 °C.

A paper-forming product for food packaging can be applied to all kinds of food packaging containers, such as a paper cup used for including water, carbonated drinks, coffee, beer, and the like, a ramen cup, a chicken box, and a lunchbox, in need of water resistance, oil resistance, a thermally adhesive property, and the like.

### [Effect]

According to the present invention, it is possible to provide a method of manufacturing a low-viscosity aqueous dispersion with excellent dispersibility, high uniformity of dispersed particles with a decreased amount of residue remaining after filtering by suppressing generation of bad smells as much as possible and using volatile amines when a coating film is formed, as compared with the case of using ammonia alone. Further, it is possible to manufacture an environmentally friendly paper cup-forming product with excellent water resistance, oil resistance, thermally adhesive property, alkaline water-dissociative property, and the like suitable for a food packaging container by coating paper with the aqueous dispersion improved in various properties required for manufacturing a paper cup by using additives such as a matting agent, a slip agent, an anti-foaming agent, and the like in the aqueous dispersion.

### [Description of Drawings]

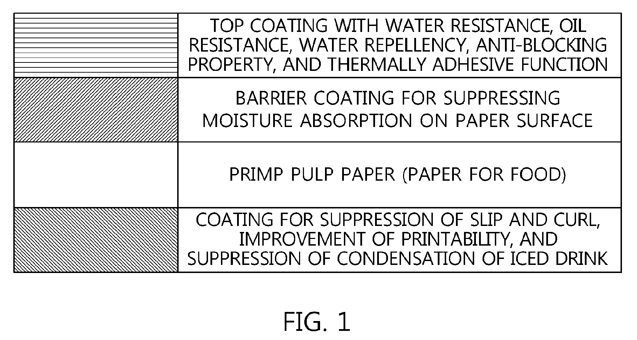

FIG. 1 is a cross-sectional view of paper formed of a coating solution of the present invention.

### [Best Mode]

Hereinafter, the present invention will be described in detail with reference to Examples. However, the scope of right of the present invention is not limited by these Examples.

The materials used herein are as follows.
DMEA: Dimethylethanolamine
KOH: Potassium hydroxide (purity: 85%)
Ammonia water: Aqueous solution having an ammonia concentration of 28%
NUCREL 2806,960 (Dupont)
PRIMACOR 5980i (Dow)
DSC (Differential Scanning Calorimetry)

### Example 1

240 g of PRIMACOR 5980i (acrylic acid content: 20.5 mass%, MFR=300 g/10 minutes), 728.48 g of ion-exchange water, 5.07 g of KOH, and 26.45 g of ammonia water were added to a 1500 ml autoclave, and then stirred at a temperature 100°C at a stirring speed of 1200 rpm for 2 hours. Herein, a degree of neutralization of (KOH + ammonia water) (a ratio of neutralization of an ethylene-acrylic acid-based copolymer with respect to a carboxylic group in terms of molar amount) was 75 mol%, and a mol% ratio of KOH : ammonia water was 15 : 85. Then, the resultant product was cooled to 50°C or less and then packaged, so that an aqueous dispersion was obtained. The obtained aqueous dispersion included solids of 24 mass% and had the viscosity of 400 cps/25 °C.

### Example 2

240 g of NUCREL 2806 (acrylic acid content: 18 mass%, MFR = 60 g/10 minutes), 731.40 g of ion exchanged water, 4.00 g of DMEA, and 24.59 g of ammonia water were added to a 1500 ml autoclave, and then stirred at a temperature 100°C at a stirring speed of 1200 rpm for 2 hours. Herein, a degree of neutralization of (DMEA + ammonia water) (a ratio of neutralization of an ethylene-acrylic acid-based copolymer with respect to a carboxylic group in terms of molar amount) was 75 mol%, and a mol% ratio of DMEA : ammonia water was 10 : 90. Then, the resultant product was cooled to 50°C or less and then packaged, so that an aqueous dispersion was obtained. The obtained aqueous dispersion included solids of 24 mass% and had the viscosity of 7200 cps/25 °C.

### Example 3

230 g of NUCREL 2806 (acrylic acid content: 18 mass%, MFR = 60 g/10 minutes), 740.16 g of ion exchanged water, 11.51 g of DMEA, and 18.33 g of ammonia water were added to a 1500 ml autoclave, and then stirred at a temperature 100°C at a stirring speed of 1200 rpm for 2 hours. Herein, a degree of neutralization of (DMEA + ammonia water) (a ratio of neutralization of an ethylene-acrylic acid-based copolymer with respect to a carboxylic group in terms of molar amount) was 75 mol%, and a mol% ratio of DMEA : ammonia water was 30 : 70. Then, the resultant product was cooled to 50°C or less and then packaged, so that an aqueous dispersion was obtained. The obtained aqueous dispersion included solids of 23 mass% and had the viscosity of 10,000 cps/25°C.

### Example 4

240 g of NUCREL 2806 (acrylic acid content: 18 mass%, MFR = 60 g/10 minutes), 735.06 g of ion exchanged water, 6.63 g of KOH, and 18.31 g of ammonia water were added to a 1500 ml autoclave, and then stirred at a temperature 100°C at a stirring speed of 1200 rpm for 2 hours. Herein, a degree of neutralization of (KOH + ammonia water) (a ratio of neutralization of an ethylene-acrylic acid-based copolymer with respect to a carboxylic group in terms of molar amount) was 67 mol%, and a mol% ratio of KOH : ammonia water was 25 : 75. Then, the resultant product was cooled to 50°C or less and then packaged, so that an aqueous dispersion was obtained. The obtained aqueous dispersion included solids of 24 mass% and had the viscosity of 1,850 cps/25 °C.

### Example 5

230 g of NUCREL 2806 (acrylic acid content: 18 mass%, MFR = 60 g/10 minutes), 734.88 g of ion exchanged water, 2.66 g of KOH, and 32.46 g of ammonia water were added to a 1500 ml autoclave, and then stirred at a temperature 100°C at a stirring speed of 1200 rpm for 2 hours. Herein, a degree of neutralization of (KOH + ammonia water) (a ratio of neutralization of an ethylene-(meth)acrylic acid-based copolymer with respect to a carboxylic group in terms of molar amount) was 100 mol%, and a mol% ratio of KOH : ammonia water was 7 : 93. Then, the resultant product was cooled to 50°C or less and then packaged, so that an aqueous dispersion was obtained. The obtained aqueous dispersion included solids of 23 mass% and had the viscosity of 8,200 cps/25°C.

### Example 6

200 g of NUCREL 960 ((meth)acrylic acid content: 15 mass%, MFR = 60 g/10 minutes), 775.72 g of ion exchanged water, 6.00 g of KOH, 16.18 g of DMEA, and 20.24 g of ammonia water were added to a 1500 ml autoclave, and then stirred at a temperature 130°C at a stirring speed of 1200 rpm for 2 hours. Herein, a degree of neutralization of (KOH + DMEA + ammonia water) (a ratio of neutralization of an ethylene-(meth)acrylic acid-based copolymer with respect to a carboxylic group in terms of molar amount) was 180 mol%, and a mol% ratio of KOH : DMEA : ammonia water was 15 : 30 : 55. Then, the resultant product was cooled to 50°C or less and then packaged, so that an aqueous dispersion was obtained. The obtained aqueous dispersion included solids of 20 mass% and had the viscosity of 10,000 cps/25°C.

### Example 7

172.5 g of NUCREL 2806 (acrylic acid content: 18 mass%), 57.5 g of NUCREL 960 ((meth)acrylic acid content: 15 mass%), 734.27 g of ion exchanged water, 5.75 g of KOH, 29.98 g of ammonia water were added to a 1500 ml autoclave, and then stirred at a temperature 130°C at a stirring speed of 1200 rpm for 2 hours. Herein, a degree of neutralization of (KOH + ammonia water) (a ratio of neutralization of an ethylene-(meth)acrylic acid-based copolymer + an ethylene-acrylic acid copolymer with respect to a carboxylic group in terms of molar amount) was 110 mol%, and a mol% ratio of KOH : ammonia water was 15 : 85. Then, the resultant product was cooled to 50°C or less and then packaged, so that an aqueous dispersion was obtained. The obtained aqueous dispersion included solids of 23 mass% and had the viscosity of 4,500 cps/25 °C.

### Example 8

200 g of NUCREL 960 ((meth)acrylic acid content: 15 mass%, MFR = 60 g/10 minutes), 771.97 g of ion exchanged water, 5.56 g of KOH, and 22.48 g of DMEA were added to a 1500 ml autoclave, and then stirred at a temperature 110°C at a stirring speed of 1200 rpm for 2 hours. Herein, a degree of neutralization of (KOH + DMEA) (a ratio of neutralization of an ethylene-(meth)acrylic acid-based copolymer with respect to a carboxylic group in terms of molar amount) was 100 mol%, and a mol% ratio of KOH : DMEA was 25 : 75. Then, the resultant product was cooled to 50°C or less and then packaged, so that an aqueous dispersion was obtained. The obtained aqueous dispersion included solids of 20 mass% and had the viscosity of 9,500 cps/25°C.

### Comparative Example 1

240 g of NUCREL 2806 (acrylic acid content: 18 mass%), 723.57 g of ion exchanged water, and 36.43 g of ammonia water were added to a 1500 ml autoclave, and then stirred at a temperature 100°C at a stirring speed of 1200 rpm for 2 hours. Herein, a degree of neutralization of ammonia water (a ratio of neutralization of an ethylene-acrylic acid-based copolymer with respect to a carboxylic group in terms of molar amount) was 100 mol%. Then, the resultant product was cooled to 50°C or less and then packaged, so that an aqueous dispersion was obtained. The obtained aqueous dispersion included solids of 24 mass%.

When the reaction product was filtered, a non-dissolved residue was generated in a great amount.

### Comparative Example 2

240 g of NUCREL 2806 (acrylic acid content: 18 mass%), 730.30 g of ion exchanged water, and 29.70 g of KOH were added to a 1500 ml autoclave, and then stirred at a temperature 100°C at a stirring speed of 1200 rpm for 2 hours. Herein, a degree of neutralization of KOH (a ratio of neutralization of an ethylene-acrylic acid-based copolymer with respect to a carboxylic group in terms of molar amount) was 75 mol%. Then, the resultant product was cooled to 50°C or less and then packaged, so that an aqueous dispersion was obtained. The obtained aqueous dispersion included solids of 24 mass% and had the viscosity of 1,700 cps/25°C.

### Comparative Example 3

200 g of NUCREL 960 ((meth)acrylic acid content: 15 mass%), 781.20 g of ion exchanged water, 5.00 g of KOH, and 13.80 g of ammonia water were added to a 1500 ml autoclave, and then stirred at a temperature 130°C at a stirring speed of 1200 rpm for 2 hours. Herein, a degree of neutralization of (KOH + ammonia water) (a ratio of neutralization of an ethylene-(meth)acrylic acid-based copolymer with respect to a carboxylic group in terms of molar amount) was 90 mol%. Then, the resultant product was cooled to 50°C or less and then packaged, so that an aqueous dispersion was obtained. The obtained aqueous dispersion included solids of 20 mass%. The dispersion included non-dispersed solids in a great amount.

### Comparative Example 4

200 g of NUCREL 960 ((meth)acrylic acid content: 15 mass%), 772.98 g of ion exchanged water, 5.56 g of KOH, and 21.46 g of ammonia water were added to a 1500 ml autoclave, and then stirred at a temperature 130°C at a stirring speed of 1200 rpm for 2 hours. Herein, a degree of neutralization of (KOH + ammonia water) (a ratio of neutralization of an ethylene-(meth)acrylic acid-based copolymer with respect to a carboxylic group in terms of molar amount) was 130 mol%. Then, the resultant product was cooled to 50°C or less and then packaged, so that an aqueous dispersion was obtained. The obtained aqueous dispersion included solids of 20 mass% and had the viscosity of 100,000 cps/25°C. The aqueous dispersion was not suitable as a coating solution since the viscosity was too high.

A result of evaluation on the obtained aqueous dispersions was as listed in the following Table 1.

### 1) Dispersibility

The aqueous dispersions were examined with the naked eye and then evaluated.

### 2) Viscosity

The viscosities of the obtained aqueous dispersions at 25°C were measured by using a Brookfield viscometer (a product of Brookfield).

### 3) Alkaline water-dissociative property

A specimen was cut into a size of about 1 cm² and dissociated in an alkaline solution (0.5% sodium hydroxide solution) adjusted in temperature to 55 ± 5°C by operating a stirrer at 1500 ± 100 rpm for 10 minutes, and filtered. Then, an alkaline dissociative property was evaluated (A test was conducted according to the quality test standard KS A-1518 for adhesive paper for printing).

### 4) Resin melting temperature

An analysis was conducted by DSC (Differential Scanning Calorimetry) according to ASTM D3418.

**[Table 1]**

| | Copolymer | | Degree of neutralization | Neutralization ratio (mol%) | | | Solid | Dispersibility | Viscosity | Alkaline water | Resin melting |
|---|---|---|---|---|---|---|---|---|---|---|---|
| | Item | Acid content | (mol%) | Ammonia | DMEA | KOH | (wt.%) | | (cps/25 °C) | Dissociative property | Temperature (°C) |
| Example 1 | PRIMACOR | 20.5 wt.% | 75 | 85 | - | 15 | 24 | Good | 400 | Good | 77 |
| | 5980i | | | | | | | | | | |
| Example 2 | NUCREL 2806 | 18.0 wt.% | 75 | 90 | 10 | - | 24 | Good | 7,200 | Good | 83 |
| Example 3 | NUCREL 2806 | 18.0 wt.% | 75 | 70 | 30 | | 23 | Good | 10,000 | Good | 83 |
| Example 4 | NUCREL 2806 | 18.0 wt.% | 67 | 75 | - | 25 | 24 | Good | 2,500 | Good | 83 |
| Example 5 | NUCREL 2806 | 18.0 wt.% | 100 | 93 | - | 7 | 23 | Good | 8,200 | Good | 83 |
| Example 6 | NUCREL 960 | 15.0 wt.% | 180 | 55 | 30 | 15 | 20 | Good | 10,000 | Good | 91 |
| Example 7 | NUCREL 2806/960 = 3/1 | 17.2 wt.% | 110 | 85 | - | 15 | 23 | Good | 4,500 | Good | 85 |
| Example 8 | NUCREL 960 | 15 wt.% | 100 | - | 75 | 25 | 20 | Good | 9,500 | Good | 91 |
| Comparative Example 1 | NUCREL 2806 | 18.0 wt.% | 100 | 100 | - | - | 24 | Great amount of residue | - | - | 83 |
| Comparative Example 2 | NUCREL 2806 | 18.0 wt.% | 75 | | - | 100 | 24 | Good | 1,700 | Good | 83 |
| Comparative Example 3 | NUCREL 960 | 15.0 wt.% | 90 | 75 | - | 25 | 20 | Bad emulsification | - | - | 91 |
| Comparative Example 4 | NUCREL 960 | 15.0 wt.% | 130 | 105 | - | 25 | 20 | Good | 100,000 ↑ | Good | 91 |

In the present invention, when KOH is used alone, dispersibility with respect to water is excellent but a swelling property with respect to water is increased, and, thus, water resistance of a film is decreased. When ammonia water is used alone, water resistance is good, but dispersibility with respect to water is decreased, and, thus, a non-dispersed residue is generated. Amines have good water resistance and dispersibility, but have a high boiling point and thus have a low volatility. Therefore, amines are highly likely to leave residual odor on paper after coating, and the viscosity is increased. Accordingly, by using a mixture thereof, it is possible to increase water resistance and dispersibility, remove residual odor after coating, and also possible to manufacture a chemical having an appropriate viscosity.

Further, a matting agent, a slip agent, and an anti-foaming agent were added into water-dispersible resins manufactured in Example 1 to Example 8, and a secondary coating solution was manufactured so as to be suitable for manufacturing an environmentally friendly paper cup as follows.

1) A barrier coating solution for suppressing moisture absorption on paper surface was manufactured by adding oxidized starch of 0.3 to 1.0 kg(using 1 wt.% of solids in a dispersion), a silicon-based anti-foaming agent of 0.10 kg, and water of 30 to 50% into an aqueous dispersion of 100.00 (unit: kg) manufactured in Example.

2) A coating solution for thermal adhesion, water resistance, oil resistance, water repellency, and anti-blocking was manufactured by adding a silica-based matting agent of 1.25kg (using 5 wt.% of solids in a dispersion), a polyethersiloxane slip agent of 0.30kg (using 1.2 wt.% of solids in a dispersion), a silicon-based anti-foaming agent of 0.10kg, a siloxane-based water-repelling agent of 0.05, and water of 10 to 30% into an aqueous dispersion of 100.00 (unit: kg) manufactured in Example 1 to 8.

3) A coating solution for (suppression of) slip and curl, improvement of printability, and suppression of condensation is manufactured by adding a silica-based matting agent of 2.50kg (using 10 wt.% of solids in a dispersion), a polyethersiloxane slip agent of 0.30kg (using 1.2 wt.% of solids in a dispersion), a silicon-based condensation suppressing agent of 0.01kg, and water of 50 to 70% into an aqueous dispersion of 100.00 (unit: kg) manufactured in Example.

The mixed solution was uniformly mixed and dispersed (at a temperature of 40 to 50°C at 500 to 1500 RPM for 2 to 3 hours), and then, this aqueous dispersion coating solution was set to be coated on prime pulp. A coating device capable of simultaneously coating and drying the coating solutions described in paragraphs 1) and 2) on a front surface of the prime pulp (160 g/m² to 360 g/m²) and the coating solution described in paragraph 3) on a rear surface thereof was used to coat and hot-air dry the coating solutions, and then, the paper was cut, cut to be fit with a cup mold, and molding-processed in sequence, so that a paper cup as one of paper containers was manufactured.

According to a coating process, base paper coated in a part where a primary chemical is supplied is dried while passing through a chamber where hot air of 160°C to 180°C is blown, and then coated again in a part where a secondary chemical is supplied. The base paper coated as such is completely dried while passing through a chamber where hot air of 180°C to 200°C is blown, and coated on the rear surface in a part where a tertiary chemical is supplied, and then dried while passing through a chamber where hot air of 160°C to 180°C is blown. Then, the coated paper is cooled to 30°C to 50°C by being rolled in a cooling roll. All of these processes are simultaneously performed in a single machine.

The coating process is a process for suppressing permeation of the secondary chemical to the paper in the primary coating part in order for the secondary chemical to exhibit maximum properties, such as a thermally adhesive property, water resistance, oil resistance, water repellency, and anti-blocking property, with a minimum amount of the coating solution, and greatly contributes to improvement in productivity by increasing a drying speed. Due to the water repellency, which a conventional PE paper cup or other environmentally friendly cups do not have, the inside of the paper cup can be kept clean without contamination after including coffee or drinks.

In the secondary coating part, an air knife system is adopted to suppress a pin hole so as to focus on the dispersibility and film coating property of the chemical.

In the tertiary coating part, a slip property is given to the rear surface of the paper (to be an outer surface of the paper cup after being molding-processed) in order to easily suppress curling, improve printability, suppress condensation, and separate layers. Due to the condensation suppressing property, which a conventional cup does not have, the paper cup does not lose elasticity even if the paper cup is used for a long time for including iced drinks or alcoholic drinks.

A coating weight and properties of the paper coated by the above-described method are as listed in Table 2.

**[Table 2]**

| Classification | | | | Unit (g/m²) | PE paper cup | Sample 1 | Sample 2 | Sample 3 | Sample 4 | Sample 5 | Sample 6 | Sample 7 |
|---|---|---|---|---|---|---|---|---|---|---|---|---|
| | | | | | 170 | 170 | | | | | | |
| Coating weight | Total | | | g/m² | 16 | 5.5 | 4.2 | 4.0 | 4.4 | 5.0 | 6.5 | 8.0 |
| | Top (Primary) | | | g/m² | 16 | 1.5 | 1.0 | 1.0 | 1.0 | 1.0 | 1.0 | 1.0 |
| | Top (Secondary) | | | | - | 2.5 | 2.2 | 2.0 | 3.0 | 3.0 | 4.5 | 5.5 |
| | Back (Tertiary) | | | | - | 1.5 | 1.0 | 1.0 | 0.4 | 1.0 | 1.0 | 1.5 |
| Gloss | | | | % | 23.7/10.6 | 37.4/14.0 | 33 | 25 | 27 | 30 | 32 | 27.6 |
| Water resistance (5-minute Cobb) | | | 20°C | g/m² | 0.2 | 1.3 | 5.9 | 40.4 | 28 | 2.1 | 1.0 | 0.8 |
| | | | 90°C | | 0.3 | 10.1 | 20 | 50.9 | 28 | 17.5 | 9.6 | 5.2 |
| Kit Test | | | | Kit No. | 12 | 10 | 10 | 8 | 10 | 10 | 11 | 12 |
| Water repellency | | | | R_{No}. | 8 | 8 | 8 | 8 | 8 | 8 | 8 | 8 |
| Water vapor permeability | | | | 5-point method | 5 | 4.0 | 2.0 | 1.5 | 2.0 | 3.0 | 4.0 | 4.0 |
| Thermally adhesive property (TS+BS) | | 180°C/4 kgf | | sec | 5 | 1.0 | 1.0 | 1.5 | 1.0 | 1.0 | 1.0 | 1.0 |
| | | 230°C/4 kgf | | | 1.5 | 1.0 | 1.0 | 1.5 | 1.0 | 1.0 | 1.0 | 1.0 |
| Anti-blocking property (TS+BS) | | 60°C/2 kgf/l min | | 5-point method | 5 | 4.0 | 4.0 | 4.0 | 4.0 | 4.0 | 4.0 | 3.7 |
| Dissociative property (Recyclability) | | 1140 rpm/10 min | | 5-point method | PE film detached | 4.0 | 4.0 | 4.0 | 4.0 | 4.0 | 4.0 | 4.0 |

A coating amount was measured by checking a basis weight of base paper for food packaging and a basis weight of coated base paper, and water vapor permeability (KS K 0594-1988) and an anti-blocking property were measured on the basis of 50°C and a pressure 1 Kg/square inch. Water resistance was measured with water of 20°C and 90°C, and water repellency was measured by observing fluidity of water with the naked eye.

A result of evaluation on the properties of the manufactured paper cup was as listed in Table 3.

Evaluation on durability of paper cup

### 1) Evaluation on water resistance and oil resistance

Cold water, a carbonated drink, coffee (95°C), and olive oil were put into paper cups and then kept at room temperature for 10 hours. Then, a change in an external appearance was checked.

### 2) Evaluation on durability

Cold water was put into a paper cup and kept at 80°C for 5 hours. Then, water leakage was checked.

### 3) Evaluation of thermally adhesive property

A degree of a thermally adhesive property was evaluated while a paper cup was manufactured from coated paper for food packaging.

Material test and leaching test with respect to residue such as heavy metal on paper cup (according to polyethylene test standards)
Material test (mg/kg): standard of 100 or less each
Lead (Pb): not detected
Cadmium (Cd): not detected
Leaching test
Heavy metal (Pb) mg/l: 1.0 or less (standard of 1.0 or less)
potassium permanganate consumption mg/l : 1.0 (standard of 10 or less)
Residue evaporated: 10 (standard of 30 or less, but 150 or less only when a service temperature is 100°C or less and a leachate is n-heptane)

**[Table 3]**

| Kind of dispersion | | Example 1 | Example 2 | Example 3 | Example 4 | Example 5 | Example 6 | Example 7 | Example 8 | Comparative Example 2 |
|---|---|---|---|---|---|---|---|---|---|---|
| Viscosity (cps/25°C) | | 350 | 920 | 850 | 490 | 620 | 400 | 510 | 410 | 510 |
| Solid (wt.%) | | 25.6 | 24 | 22 | 25 | 22.8 | 15.8 | 23.8 | 16.3 | 23.8 |
| Coating property | | Good | Good | Good | Good | Good | Good | Good | Good | Good |
| Slip property | | Good | Good | Good | Good | Good | Good | Good | Good | Good |
| Water resistance & Oil resistance | Carbonated water | No change | No change | No change | No change | No change | No change | No change | No change | Leaked |
| | Coffee | No change | No change | No change | No change | No change | No change | No change | No change | Leaked |
| | Olive oil | No change | No change | No change | No change | No change | No change | No change | No change | Leaked |
| Durability | | No leakage | No leakage | No leakage | No leakage | No leakage | No leakage | No leakage | No leakage | Bad |
| Thermally adhesive property | | Good | Good | Good | Good | Good | Good | Good | Good | Good |
| Alkaline water-dissoluble property | | Good | Good | Good | Good | Good | Good | Good | Good | Good |

A leaching test with respect to a residue such as heavy metal was conducted by Korea Conformity Laboratories as a food hygiene testing/inspection institute assigned by Korean Food and Drugs Administration in order to check whether the manufactured paper for food packaging is suitable as a food container and suitable for food packaging, and a result thereof was as listed in Table 4.

**[Table 4]**

| No.2013010020026 | | | | |
|---|---|---|---|---|
| Test Item | Unit | Reference | Result | Decision |
| Leached lead (Pb) | mg/L | 1 or less | Not detected | Suitable |
| Leached potassium permanganate consumption | mg/L | 10 or less | 1 | Suitable |
| Leached residue evaporated 4% acetic acid | mg/L | 30 or less | 10 | Suitable |
| Leached residue evaporated water | mg/L | 30 or less | 2 | Suitable |
| Leached residue evaporated n-heptane | mg/L | 150 or less | 11 | Suitable |
| Leached residue evaporated 50% ethanol | mg/L | 30 or less | 5 | Suitable |
| Leached 1-hexene 4% acetic acid | mg/L | 3 or less | Not detected | Suitable |
| Leached 1-hexene water | mg/L | 3 or less | Not detected | Suitable |
| Leached 1-hexene n-heptane | mg/L | 3 or less | Not detected | Suitable |
| Leached 1-hexene 50% ethanol | mg/L | 3 or less | Not detected | Suitable |
| Leached 1-octen 4% acetic acid | mg/L | 15 or less | Not detected | Suitable |
| Leached 1-octen water | mg/L | 15 or less | Not detected | Suitable |
| Leached 1-octen n-heptane | mg/L | 15 or less | Not detected | Suitable |
| Leached1-octen 50% ethanol | mg/L | 15 or less | Not detected | Suitable |
| Decision | Suitable | | | |
| Test method | Revolution of a device and a container/package for food | | | |

| | | | | |
|---|---|---|---|---|
| 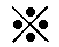 The decision was made only on the requested test items. | | | | |

## Claims

1. A method of manufacturing an aqueous dispersion prepared by mixing amines, alkali metal hydroxide, and ammonia water with each of an ethylene-acrylic acid copolymer or an ethylene-(meth)acrylic acid copolymer or a mixture of these polymers, and neutralizing the resulting mixture in an aqueous medium.

2. The method of manufacturing an aqueous dispersion of claim 1, wherein each of the ethylene-acrylic acid copolymer or the ethylene-(meth)acrylic acid copolymer or the mixture of these polymers is prepared by neutralizing and dispersing a resin including acrylic acid and (meth)acrylic acid having a total content of 12 wt.% to 21 wt.% in the aqueous medium.

3. The method of manufacturing an aqueous dispersion of claim 1, wherein the aqueous dispersion is a water-dispersible solution prepared by neutralizing and dispersing each of the ethylene-acrylic acid copolymer or the ethylene-(meth)acrylic acid copolymer or the mixture of these polymers in the aqueous medium, and a film formed of the aqueous dispersion has a melting temperature (measured by DSC (Differential Scanning Calorimetry)) of 75°C or more.

4. An aqueous dispersion manufactured by a manufacturing method of any one of claims 1 to 3, wherein a total mol% of alkali metal hydroxide, amines, and ammonia water used for neutralizing acrylic acid or (meth)acrylic acid in a resin as each of an ethylene-acrylic acid copolymer or an ethylene-(meth)acrylic acid copolymer or a mixture of these polymers is in the range of 60 mol% to 200 mol% with respect to mol% of acrylic acid or (meth)acrylic acid.

5. An aqueous dispersion manufactured by a manufacturing method of any one of claims 1 to 3, wherein a mol% ratio of a mixture of alkali metal hydroxide or amines and ammonia water used for neutralizing acrylic acid or (meth)acrylic acid in a resin as each of an ethylene-acrylic acid copolymer or an ethylene-(meth)acrylic acid copolymer or a mixture of these polymers, i.e., a mol% ratio of amines : ammonia water, is in the range of 99 : 1 to 1 : 99.

6. An aqueous dispersion manufactured by a manufacturing method of any one of claims 1 to 3, wherein a mol% ratio of a mixture of alkali metal hydroxide or amines and ammonia water used for neutralizing acrylic acid or (meth)acrylic acid in a resin as each of an ethylene-acrylic acid copolymer or an ethylene-(meth)acrylic acid copolymer or a mixture of these polymers, i.e., a mol% ratio of alkali metal hydroxide : (amines + ammonia water), is in the range of 40 : 60 to 1 : 99.

7. An aqueous dispersion manufactured by a manufacturing method of any one of claims 1 to 3, wherein the aqueous dispersion includes solids in the range of 10 to 40 wt.% and has the viscosity in the range of 100 to 10,000 cps/25°C.

8. A method of manufacturing a paper coating solution, which is improved in mechanical property, water repellency, water resistance, oil resistance, thermally adhesive property, heat resistance, anti-blocking property, and alkaline water-dissociative property as a paper coating agent, by mixing additives including a matting agent, a slip agent, an anti-foaming agent with an aqueous dispersion manufactured by a manufacturing method of any one of claims 1 to 3.

9. A method of manufacturing a paper coating solution manufactured by adding silica powder of 1 to 10 wt.% with respect to solids in an aqueous dispersion manufactured by a manufacturing method of any one of claims 1 to 3 and using a polyethersiloxane-based slip agent of 0.1 to 5 wt.% with respect to the solids in the aqueous dispersion.

10. The method of manufacturing a paper coating solution of claim 8 or claim 9, wherein the paper coating solution includes solids in the range of 15 to 30 wt.% and has the viscosity in the range of 50 to 5,000 cps/25°C.

11. A paper coating solution manufactured by a manufacturing method of claim 8 or claim 9.

12. A paper-forming product coated with the paper coating solution of claim 11.

13. The paper-forming product of claim 12, wherein the paper-forming product is a paper cup.
